# EUROPEAN PATENT SPECIFICATION

(11) **EP 2 419 245 B1**
(45) Date of publication and mention of the grant of the patent: **10.05.2017**
(21) Application number: 10737741.8
(22) Date of filing: 07.04.2010
(51) Int. Cl.: B25J 9/04, B25J 9/10

(54) **MANIPULATOR**
MANIPULATOR
MANIPULATEUR

(30) Priority: 14.04.2009 CZ 20090232
(43) Date of publication of application: 22.02.2012
(73) Proprietor: Protechnik S.R.O., 569 32 Staré Mesto 247 (CZ)
(72) Inventor: TANNO, Daniel, 7002 Chur (CH)
(74) Representative: Soukup, Petr
(86) International application number: PCT/CZ2010/000041
(87) International publication number: WO 2010/118707

(56) References cited:
- EP-A2- 2 416 924
- JP-A- 1 146 676
- JP-A- 11 156 769
- JP-A- 63 269 498
- US-A- 3 033 059

## Description

### The Field of invention:

The invention involves construction of a manipulator designed for transferring items from one place to another, especially for automatic stowing and changing of workpieces at numerically controlled machine tools and centres, for handling items in stores, on assembly lines, in paint shops, etc. The manipulator can especially be utilised in connection with a stack as part of the automatic handling device.

### The present prior art

At present, there are many specific item handling automatic systems fitted with manipulators or robots; their construction and design are especially based on the place they may be utilised in and type of products that are carried. In most cases they include systems with industrial robots or linear drive-based exchange mechanisms in a horizontal or vertical plane. The disadvantage of using the industrial robots is their high purchase price, difficult programming, relatively low carrying capacity and considerable cover area demands when protective fencing of the workplace needs to be provided or the robot placed in a special booth to ensure safety. And the disadvantage of using the linear drive-based exchange mechanisms is their demanding and complicated deformation compensation when the arm is extended and under higher load. Stiffness increase then leads to higher acquisition cost, more robust constructions and therefore higher cover area demands. In most cases, the construction of manipulators is based on their special utilisation in the given branch of industry or on the type of trasferred products as is evident for instance from solutions described in CZ 1991-1746 A1, CZ 1992-2266 A1, CZ 1992-3889 A1, CZ 2001-1084 A1, CZ 2007-592 A1 or CZ 299587 C2 documents.

Further known are mechanisms on a basis of chains of shoulders with rotation drives, the disadvantage of which is the demanding and complicated deformation compensation at higher extension and load. These mechanisms have their axes of individual rotation nodes parallel to each other and perpendicular to the horizontal plane, which means that the main handling movements take place in the horizontal plane, leading to higher cover area demands. In the vertical plane, these mechanisms are not used as the burden load must be directly compensated by drive units in all rotation nodes, which would necessarily result in higher purchase costs of such equipment. An example of this equipment includes the solution described in Patent document JP 01 146676 A.

Patent document EP2 416 924 A2 is a prior art document according to Article 54(3) EPC, and discloses a manipulator designed for handling items from one place to another, especially for stowing and changing of workpieces at machines, with its end adapter being fitted with technical means to enable clamping and transfer of items and whose drives of the functional construction nodes are connected with the control unit; the manipulator consists of a height unit, rotation unit and a swinging unit coupled to each other and with the height unit being formed by a pole line and sliding pole whose open end is adjusted for clamping of the horizontal arm of the rotation unit to which a swinging unit for adapter clamping consisting of a supporting strut and auxiliary arm forming a parallelogram is fixed, and where rotation axis of the rotation unit is perpendicular to the rotation axis of the swinging unit.

The task of the submitted invention is to present a new solution of a manipulator of a relatively simple modular construction that would enable multipurpose utilisation for item handling at various tools, production lines and in stores with front and side feeding while achieving mobility of the manipulator's end adapter in three axes and ensuring high stiffness and carrying capacity of the construction and meeting the relatively small cover area demand.

### The essence of the invention

The goal specified above is fulfilled by an invention involving a manipulator designed for handling items from one place to another, especially for stowing and changing of workpieces at machines, with the end adapter being fitted with technical means to enable clamping and transferring of items and whose drives of functional construction nodes are connected with the control unit. The principle of the invention includes the fact that that it consists of a height unit, rotation unit and a swinging unit coupled to each other and with the height unit being formed by a pole line and sliding pole whose open end is adjusted for clamping of the horizontal arm of the rotation unit to which a swinging unit for adapter clamping consisting of the supporting strut and auxiliary arm forming a parallelogram is fixed, and where rotation axis of the rotation unit is perpendicular to the rotation axis of the swinging unit.

The advantageous option is a pole line formed by a hollow section on whose one outer wall there is the first drive with a driving shaft leading to the inner spaces where it is fitted with a pinion and where on the inner side of the mentioned wall of the pole line there are two sets of guide pulleys placed in two parallel planes, concurrent with the longitudinal axis of the pole line and on the side of the adjacent wall of the pole line there is a sliding pole with the first drive with the pole being fitted with two parallel guide rails that are embedded between the guide pulleys and engaged with them, where one of the guide rails is fitted with a gear rack engaged with the pinion of the first drive.

It is further useful when in the upper part of the sliding pole there is an output shaft coupled with the second drive by belt gear, fixed on a suspension arm and on its open end is fixed the hollow horizontal arm of the rotation unit to which is fixed to the side face a flange adjusted for clamping the swinging unit and where in the inner hollow of the horizontal arm is placed the third drive of the swinging unit, to the third drive's swinging shaft is fixed the supporting strut and at its end is by swinging fixed an adapter which is also coupled with the flange by the auxiliary arm.

The submitted invention brings a new and higher effect characterised by a simple design and universal usability for handling various items, e.g. at machines with both front and side stowing of workpieces. The device is finally designed so as to enable programming that is the same or as much similar as at CNC machine tools; the manipulator system allows using more programmable zero points and access to both more levels of the magazine's storage areas and inner spaces of individual storage areas. The end adapter of the connecting unit can be adjusted for connection of technological components with various methods of clamping of items, whether mechanical, electromagnetic, pneumatic or hydraulic.

### Description of drawings on the enclosed pictures

A specific example of the manipulator design according to the invention is schematically shown on the attached drawings where
pic.1 is an overall axonometric view of the manipulator,
pic.2 is a front view of the manipulator's height unit in partial section,
pic.3 is an upper view of the height unit from pic.2,
pic.4 is an axonometric view of the sliding pole of the height unit,
pic.5a is a detailed outer view of the pole line wall fitted with the first drive and showing guide rails of the sliding pole,
pic.5b is a detailed se illustration from pic. 5a when viewed from inside,
pic.6 is a detailed axonometric view of the height and rotation unit connection,
pic.7 is a detailed axonometric view of rotation unit set,
pic.8 is a view of the horizontal swivel arm of the rotation unit from below,
pic.9 is an axonometric view of the rotation and swinging unit set.

### Invention design examples

The manipulator consists of three basic construction nodes, which include the height unit 1, rotation unit 2 and swinging unit 3 with and adapter 4 fitted with not shown common technical means to ensure clamping and transfer of items from one place to another being fixed to the end part of the swinging unit 3. Whether it concerns mechanical, pneumatic, electromagnetic or hydraulic means is not important for solution principle.

The height unit 1 is formed by a hollow pole line 11, e.g. square-section weldment, that is adjusted in its bottom part to enable clamping to a not shown base or floor, e.g. it is fitted with connection board 111 with connecting holes 1111 on it. The first drive 12 enabling continuous height adjustment of the connecting board 111 is fixed to one of the walls of the pole line 11 from the outside of the connecting board 111. The driving shaft 121 of the first drive leads to the inner spaces 112 of the pole line 11 where it is fitted with a pinion 122. On the inner side of the mentioned wall of the pole line (11) there are two sets of guide pulleys 13 placed in parallel planes, concurrent with the longitudinal axis of the pole line 11. In the inner spaces 112 of the pole line 11 there is a sliding pole 14, embedded by sliding, with an advantage of a square-section weldment fitted with parallel guide rails 141 on the side of the adjacent wall of the pole line 11 with the first drive 12 being fixed. The guide rails 141 are provide so as to be embedded between the guide pulleys 13 and be engaged with them. One of the guide rails 141 is fitted with a gear rack, engaged with a pinion 122 of the first drive 12. There is an output shaft 143 in the upper part of the sliding pole 14 and the shaft is coupled with the second drive 16 fixed on the suspension arm 17 by for example the belt gear 15. There is a rotation unit 2 formed by a hollow horizontal arm 21 fixed and with advantage screwed at the open end of the output shaft 143 of the sliding pole 14 of the height unit 1. Flange 22 adjusted for clamping the swinging unit 3 is fixed to the side face of the hollow horizontal arm. The third drive 31 of the swinging unit 3 is embedded in the inner hole 211 of the horizontal arm 21. The supporting strut 32 with an adapter 4 clamped by swinging on its end is fixed to the swinging shaft 311 on the third drive. The adapter 4 is also coupled with the flange 22 by the auxiliary arm 33 so the swinging unit 3 makes up a parallelogram.

The function and activity of the manipulator are ensured by a not shown control unit including e.g. a computer with an interactive display that is integral part of the manipulator but its design and location have no influence on the principle of the structural design. All three drives 12, 16 and 31 of individual construction nodes of the manipulator are connected with this unit.

The design being described is not the only possible structural design according to the invention but the sliding pole 14 can be placed outside the pole line 11 with no influence on its principle and sliding does not need to be ensured by gear transmission and pulleys but other common technical means, e.g. hydraulically, pneumatically, mechanically, etc. Movement of the rotation unit 2 can be provided by other then belt gear 15 and the swinging unit does not need to take the form of a parallelogram but lever transmission instead. It is obvious that the design and materials of individual parts of the manipulator will depend on the branch and environment where it will be run.

### Industrial utility

The manipulator has been designed for transferring items from one place to another, especially for automatic stowing and changing of workpieces at numerically controlled machine tools and centres, for handling item in stores, on assembly lines, in paint shops, etc. The manipulator can especially be utilised in connection with stack as part of the automatic handling device.

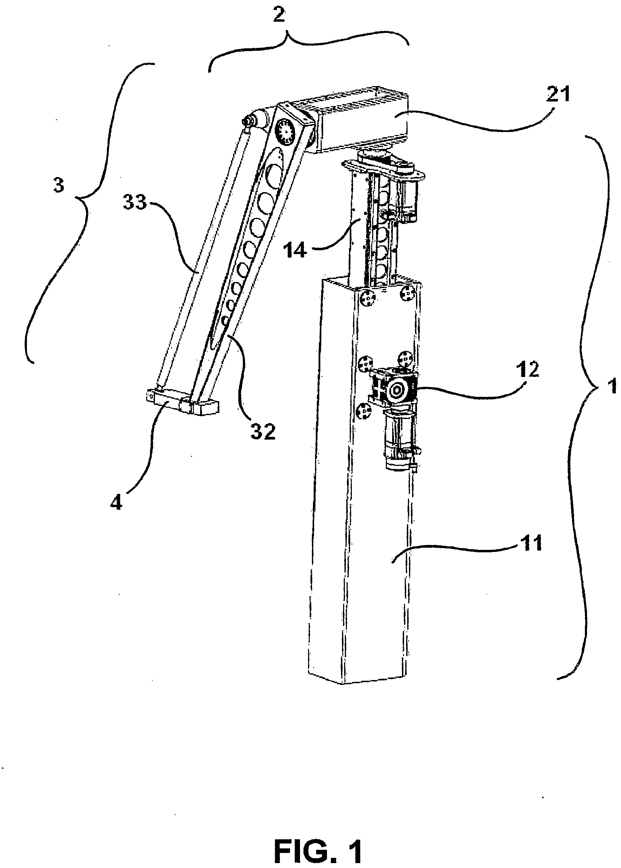

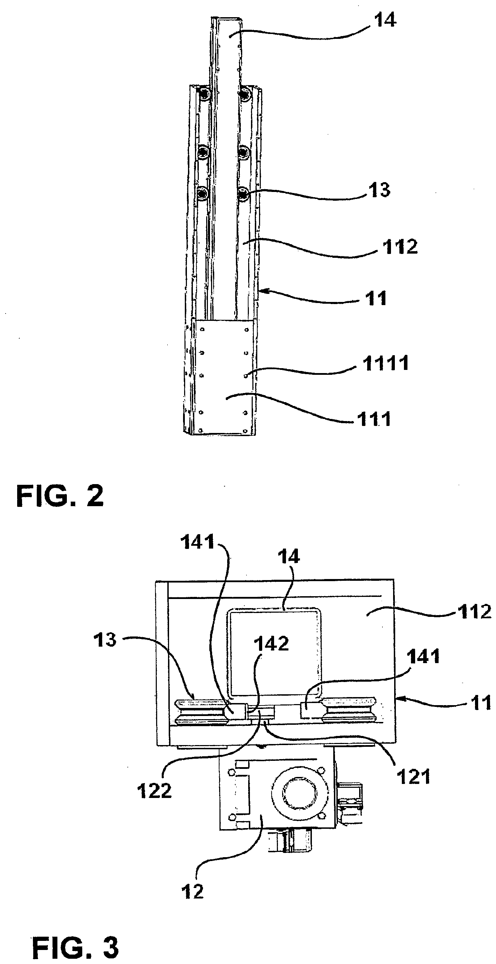

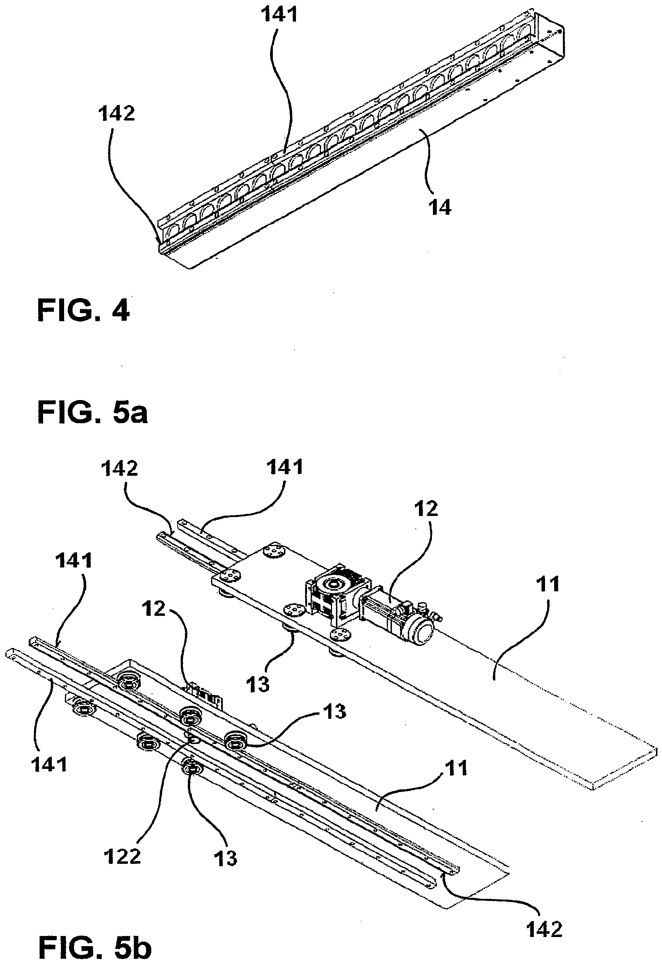

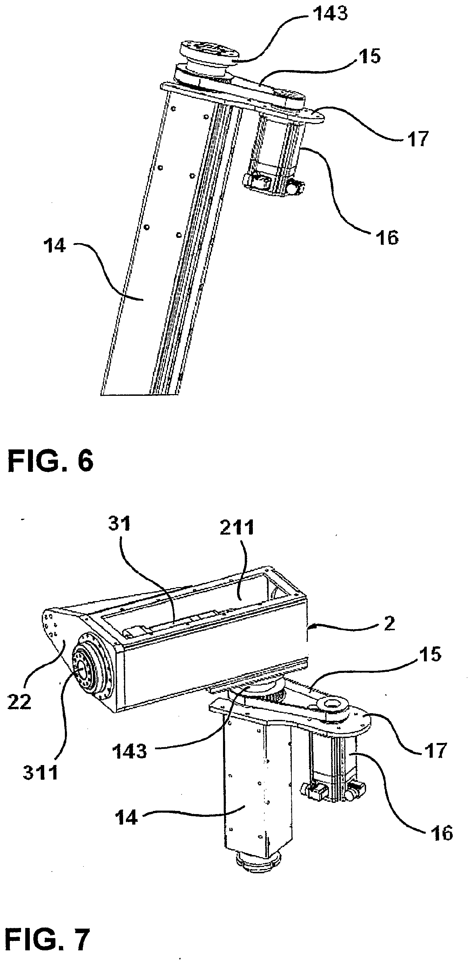

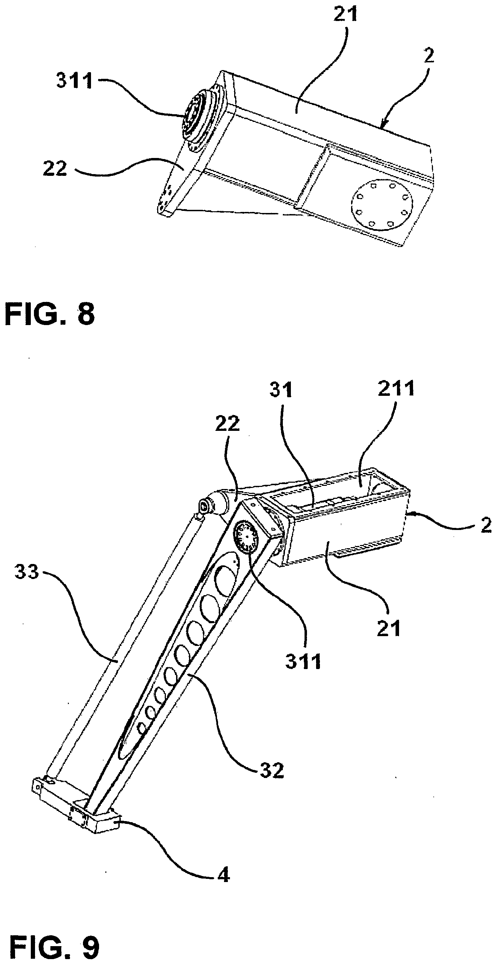

## Claims

1. A manipulator designed for handling items from one place to another, especially for stowing and changing of workpieces at machines, comprising an end adapter (4) being fitted with technical means to enable clamping and transfer of items, and drives for the functional construction of nodes which are connected with the control unit, the manipulator consisting of height unit (1) being formed by a pole line (11) and sliding pole (14), of rotation unit (2) whose axis of rotation is parallel with direction of travel of a sliding pole (14), and of a swinging unit (3) whose axis of rotation is perpendicular to the axis of rotation of the rotation unit (2), coupled to each other and formed in the way that the open end of the sliding pole (14) is adjusted for clamping of the horizontal arm (21) of the rotation unit (2) to which a swinging unit (3) for adapter (4) clamping consisting of the supporting strut (32) and auxiliary arm (33) forming a parallelogram is fixed, a first drive (12) fixed on pole line (11) is fitted with a driving shaft (121) leading to the inner spaces (112) of the pole line and in the inner hollow (211) of the horizontal arm (21) is placed a third drive (31) for the swinging unit (3), to the third drive's (31) swinging shaft (311) is fixed a supporting strut (32) and at its end is fixed an adapter (4) which is also coupled with a flange (22) of the horizontal arm (21) by an auxiliary arm (33).

2. A manipulator as in claim 1, **characterised by the fact** that the driving shaft (121) is fitted with a pinion (122) whereas on the inner side of the pole line (11) there are two sets of guide pulleys (13) placed in two parallel planes, concurrent with the longitudinal axis of the pole line and on the side of the adjacent wall of the pole line (11) there is a sliding pole (14) with the first drive (12) with the pole being fitted with two parallel guide rails (141) that are embedded between the guide pulleys (13) and engaged with them, where one of the guide rails (141) is fitted with a gear rack (142), engaged with the pinion (122) of the first drive (12).

3. A manipulator as in claim 1 or 2, **characterised by the fact** that in the upper part of the sliding pole (14) there is an output shaft (143) coupled with a second drive (16) by belt gear (15), fixed on a suspension arm (17) and on the open end of the sliding pole is fixed the hollow horizontal arm (21) of the rotation unit (2) to which is fixed to the side face a flange (22) adjusted for clamping the swinging unit (3).

## Patentansprüche

1. Ein Manipulator, entworfen zum Hantieren von Gegenständen von einem Platz auf den anderen, vor allem zum Einlegen und Austausch von Werkstücken in Maschinen, bestehend aus einem mit technischen Mitteln zum Greifen und Transfer von Gegenständen ausgestatteten Endadapter (4) und aus Antrieben für die Funktionselementsknoten, die mit der Steuerungseinheit verbunden sind, wobei der Manipulator aus einer Höheneinheit (1) in der Form einer Säuleneinheit (11) mit einer teleskopischen Säule (14), aus einer Dreheinheit (2), deren Drehachse parallel mit der Bewegungsrichtung der teleskopischen Säule (14) ist, und aus einer Pendeleinheit (3) besteht, deren Drehachse senkrecht zur Drehachse der Dreheinheit (2) steht, die so verbunden und konstruiert sind, dass das offene Ende der teleskopischen Säule (14) zur Befestigung des horizontalen Armes (21) der Dreheinheit (2) angepasst ist, an den eine Pendeleinheit (3) zur Befestigung des Adapters (4), bestehend aus einem Parallelogramm aus dem Tragarm (32) und dem Hilfsarm (33), befestigt ist, und der erste, auf der Säuleneinheit (11) befestigte Antrieb (12) ist mit einer Antriebswelle (121) ausgestattet, die in den Innenraum (112) der Säulenleitung führt, und im Innenhohlraum (211) des horizontalen Armes (21) ist ein dritter Antrieb (31) für die Pendeleinheit (3) platziert, wobei zur Pendelwelle (311) des dritten Antriebes (31) der Stützarm (32) befestigt ist und an seinem Ende der Adapter (4) befestigt ist, der auch mit dem Flansch (22) des horizontalen Armes (21) mit Hilfe des Hilfsarmes (33) verbunden ist.

2. Ein Manipulator wie in Anspruch 1, **dadurch gekennzeichnet, dass** die Antriebswelle (121) mit dem Ritzel (122) ausgestattet ist, wobei auf der Innenseite der Säuleneinheit (11) zwei Sätze von Führungsrollen (13) in zwei parallelen, mit der Längsachse der Säuleneinheit gleichlaufenden Ebenen, angebracht sind und auf der Seite der anliegenden Wand der teleskopischen Säule (11) die ausziehbare Säule (14) mit dem ersten Antrieb (12) ist, wobei die Säule mit zwei parallelen Führungsschienen (141) ausgestattet ist, die zwischen den Führungsrollen (13) eingebettet sind und in sie greifen und eine der Führungsschienen (141) mit der Zahnstange (142) verbunden ist, die in den Ritzel (122) des ersten Antriebes (12) greift.

3. Ein Manipulator wie in Anspruch 1 oder 2, **dadurch gekennzeichnet, dass** im oberen Teil der teleskopischen Säule (14) eine Ausgangswelle (143) installiert ist, verbunden mit dem zweiten Antrieb (16) durch einen Zahnriemen (15), der am Aufhängearm (17) befestigt ist, und am offenen Ende der teleskopischen Säule der hohle horizontale Arm (21) der Dreheinheit (2) befestigt ist, zur dessen Seitenoberfläche der Flansch (22) befestigt ist, der für die Befestigung der Pendeleinheit (3) eingestellt ist.

## Revendications

1. Manipulateur conçu pour la manipulation d'objets d'un endroit à un autre, spécialement pour le stockage et le changement de pièces de travail au niveau de machines, comprenant un adaptateur d'extrémité (4) muni de moyens techniques pour permettre le serrage et le transfert d'objets, et des entraînements pour la construction fonctionnelle de noeuds qui sont connectés à l'unité de commande, le manipulateur étant composé d'une unité de hauteur (1) formée par colonnes de guidage (11) et une colonne coulissante (14), d'une unité de rotation (2) dont l'axe de rotation est parallèle à la direction de déplacement d'une colonne coulissante (14), et d'une unité de basculement (3) dont l'axe de rotation est perpendiculaire à l'axe de rotation de l'unité de rotation (2), couplées les unes aux autres et formée de telle façon que l'extrémité ouverte de la colonne coulissante (14) soit ajustée pour le serrage du bras horizontal (21) de l'unité de rotation (2) auquel est fixée une unité de basculement (3) pour serrage de l'adaptateur (4), constitué du bras de support (32) et d'un bras auxiliaire (33) formant un parallélogramme, un premier entraînement (12) fixé sur les colonnes de guidage (11) est muni d'un arbre d'entraînement (121) menant aux espaces intérieurs (112) des colonnes de guidage et dans le creux intérieur (211) du bras horizontal (21) est placé un troisième entraînement (31) pour l'unité de basculement (3), à l'arbre de basculement (311) du troisième entraînement (31) est fixé un bras de support (32) et à son extrémité est fixé un adaptateur (4) qui est aussi couplé à la bride (22) du bras horizontal (21) par un bras auxiliaire (33).

2. Manipulateur selon la revendication 1, **caractérisé en ce que** l'arbre d'entraînement (121) est muni d'un pignon (122) tandis que sur la face intérieure des colonnes de guidage (11) se trouvent deux ensembles de poulies de guidage (13) placées dans deux plans parallèles, concurrent avec l'axe longitudinal des colonnes de guidage et sur le côté de la paroi adjacente des colonnes de guidage (11) se trouve une colonne coulissante (14) avec le premier entraînement (12) avec la colonne étant munie de deux rails de guidage parallèles (141) qui sont incorpores entre les poulies de guidage (13) et engagés avec celles-ci, où une des rails de guidage (141) est muni d'une crémaillère (142), engagée avec le pignon (122) du premier entraînement (12).

3. Manipulateur selon la revendication 1 ou 2, **caractérisé en ce que** sur la partie supérieure de la colonne coulissante (14) se trouve un arbre de sortie (143) couplé avec le second entraînement (16) par une transmission à courroie (15), fixée sur un bras de suspension (17) et sur l'extrémité ouverte de la colonne coulissante est fixé le bras horizontal creux (21) de l'unité de rotation (2) sur la face latérale duquel est fixée une bride (22) ajustée pour le serrage de l'unité de basculement (3).
